(19) Europäisches Patentamt / European Patent Office / Office européen des brevets

(11) EP 1 887 406 A1

(12) EUROPEAN PATENT APPLICATION

(43) Date of publication:
13.02.2008 Bulletin 2008/07

(51) Int Cl.:
*G02B 26/02* (2006.01)

(21) Application number: 06356100.5

(22) Date of filing: 08.08.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(71) Applicant: Varioptic
69007 Lyon (FR)

(72) Inventors:
- Amiot, Franck
74100 Vetraz-Monthoux (FR)
- Moreau, Liana
69003 Lyon (FR)

(74) Representative: Myon, Gérard Jean-Pierre et al
Cabinet Lavoix Lyon
62, rue de Bonnel
69448 Lyon Cedex 03 (FR)

# (54) Use of onium salts in an optical electrowetting device

(57) The present invention relates to the use of an onium salt in the conductive fluid of an optical electrowetting device, especially a variable focus optical lens driven by electrowetting. The invention also pertains to a multiphase liquid composition comprising an onium salt, as well as an optical lens driven by electrowetting comprising the same.

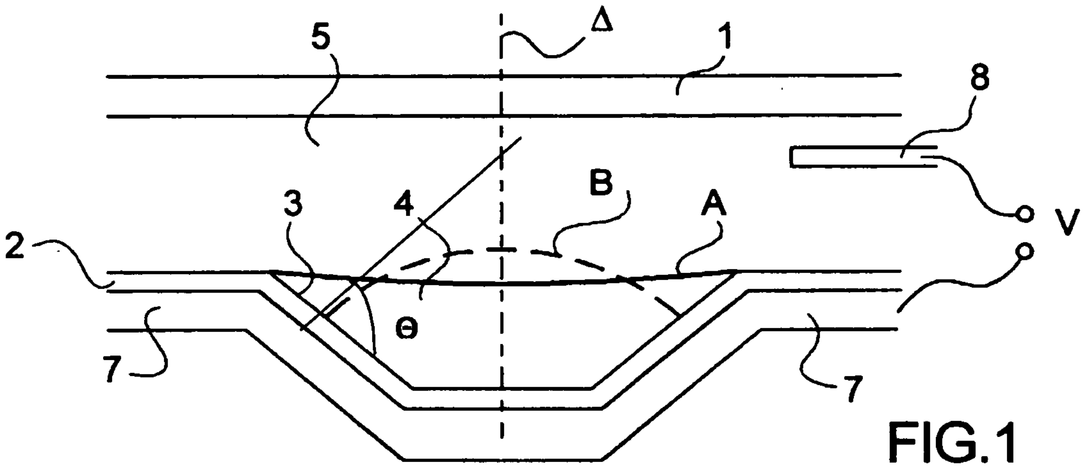


FIG.1

EP 1 887 406 A1

## Description

The invention relates to the use of organic salts, especially onium salts in an optical electrowetting device, to a multi-phase liquid composition to be used in an optical electrowetting device, particularly an optical lens driven by electrowetting containing said multi-phase liquid. The invention also relates to an optical electrowetting device, particularly an optical lens driven by electrowetting containing a conductive fluid comprising at least one organic salt, especially an onium salt and a non conductive fluid which is immiscible into said conductive fluid.

Optical electrowetting devices are devices capable of modifying an incident beam to achieve a specific optical function. They include variable focus liquid lenses, optical diaphragms, optical zooms, ophthalmic devices and are increasingly proposed in a number of applications and apparatuses, such as for example cameras, cell phones, telemeters, endoscopes, dental videos and the like.

An optical lens driven by electrowetting and of variable focal length is described for example in European Patent EP-B1-1,166,157, the content of which is incorporated herein by reference. Figure 1 of the present application corresponds to Figure 12 of that patent. A cell is defined by a fluid chamber comprising a lower plate 7,9 and an upper plate 1, and a perpendicular (normal to), or substantially perpendicular (normal to), axis Δ. The lower plate, which is non-planar, comprises a conical or cylindrical depression or recess 3, which contains a non-conductive or insulating fluid 4. The remainder of the cell is filled with an electrically displaceable conductive fluid 5 along the axis Δ.

The fluids are non-miscible, in contact over a meniscus (A, B), and have a different refractive index and substantially the same density. The cell comprises an electrical insulating substrate 2, arranged on at least an area of the lower plate, on which both fluids are in contact.

On Figure 1, the insulating substrate covers the entire lower plate, but it may be limited to an area of the lower plate on which both fluids are in contact. A first electrode is separated from the conductive fluid and the insulating fluid by the insulating substrate. In this example, the lower plate comprises a conductive body 7 acting as the first electrode and a transparent window 9 for the passage of the beam of light. The conductive body in Figure 1 is used for the centering of the non conductive liquid. Another electrode 8 is in contact with the conductive fluid. The wettability of the insulating substrate by the conductive fluid varies under the application of a voltage V between the first and the second electrodes, such that through electrowetting phenomena it is possible to modify the shape of the meniscus, depending on the voltage V applied between the electrodes. Thus, a beam of light passing through the cell normal to the plates in the region of the drop will be focused to a greater or lesser extent according to the voltage applied. Voltage V may be increased from 0 volt to a maximum voltage, which depends on the used materials. For example, when the voltage increases, the non-conducting liquid drop 4 deforms to reach a limiting position (designated as B). While drop 4 deforms from its position A (rest position, without tension, concave interface with conductive fluid 5) to its position B (convex interface with conductive fluid 5), the focus of the liquid lens varies.

The conductive fluid generally is a salt containing-aqueous fluid. The insulating fluid is typically an oil, an alkane or a mixture of alkanes, possibly halogenated.

The optical quality of an optical electrowetting device may vary in the conditions of use, depending on various parameters.

Importantly, the optical liquid lenses driven by electrowetting may present a focal hysteresis, meaning that their optical powers differ depending on voltage ramp direction, increasing or decreasing. In other words, the focal length of the device at a given voltage value may be different depending on whether the tension is increasing or decreasing and the interface between the conductive and the non-conductive fluids is moving towards or inwards with respect to the axis of the cell. It has been found that this phenomenon is related to contact angle hysteresis. It has finally been found that a degradation of the optical quality is associated with such a hysteresis.

EP-B1-1 166 157 provides a very general information on a conductive fluid, which contains salts, inorganic or else.

WO 2004/099846 discloses an electrowetting module comprising two immiscible liquids with the same density, different refractive index, one of the liquids containing a surfactant in order to lower the actuation voltage. The disclosed surfactants are essentially alcohols, preferably fluorinated alcohols, or fluorinated silicon oils.

WO 2004/099845 also discloses an electrowetting module similar to the one described above wherein a first fluid body contains an inorganic salt or ammonium formate or lithium formate. The salts are however such that their cations have a low molecular weight of below 50 u.

One objective of the invention is to provide an optical electrowetting device having improved optical properties.

Another objective of the invention is to provide such a device having low or no focal and/or angle hysteresis.

Another objective of the invention is to provide such a device that is usable on a wide range of temperature while keeping its low or zero hysteresis properties.

Another objective is to provide such a device that keeps at least substantially unchanged its time response to electrical impulsion in either voltage ramp directions, increasing or decreasing, on a wide range of temperature.

Another objective is to provide such a device that keeps at least substantially unchanged its optical properties

such as transparency on a wide range of temperature.

Still another objective is to provide such a device that can be used as a variable focus liquid lens, optical diaphragm, optical zoom and any other optical device using electrowetting in an inside or outside environment.

A further objective of the present invention to provide an optical electrowetting device, typically a variable optical lens driven by electrowetting, comprising a multi-phase liquid composition wherein the conductive fluid presents a low interfacial tension, advantageously a lower interfacial tension as those disclosed in the prior art, preferably, the lowest interfacial tension possible.

A further objective of the present invention to provide an optical electrowetting device, typically a variable optical lens driven by electrowetting, comprising a multi-phase liquid composition presenting an wide focal range, advantageously a wider focal range as those disclosed in the prior art, preferably, the widest focal range possible.

As a still further objective of the present invention, there is provided an optical electrowetting device, typically a variable optical lens driven by electrowetting, comprising a multi-phase liquid composition, wherein the parameters of which do substantially not vary upon or after thermal and/or electrical stress.

The inventors have now discovered that these and other objectives are met in whole or in part with the use according to the present invention.

In a first aspect, the invention relates to the use of at least one organic salt, which is an onium salt, in the conductive fluid of an optical electrowetting device, typically an optical lens driven by electrowetting.

Applicants have indeed surprisingly discovered that a multi-phase liquid composition, the conductive fluid of which contains an onium salt, has a lower contact angle, a lower interfacial tension and a more important (wider) focal range than without any onium salt according to the invention. Also, after thermal and electrical stress, these parameters do not vary or vary only to a limited and non relevant extent towards the optical properties of the multiple-phase liquid composition.

In the present specification and claims, the expression "onium salt" refers to an organic cation comprising at least one positively charged nitrogen, phosphorus, and/or sulfur atom, preferably at least one positively charged nitrogen or phosphorus atom, the counter-ion being any organic and/or inorganic anion, usually a halogen atom.

In the present specification and claims, the words "comprise/comprising" are synonymous with (means the same thing as) "include/including," "contain/containing", are inclusive or open-ended and do not exclude additional, unrecited elements.

According to a first preferred embodiment of the invention, onium salts used in the conductive fluid are represented by the following formula (O):

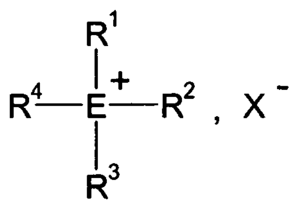

(O)

in which

- E represents nitrogen, phosphorus or sulfur, preferably nitrogen or phosphorus, more preferably nitrogen;
- $R^1$, $R^2$, $R^3$ and $R^4$, which are identical or different, each represents a saturated or unsaturated, linear, branched, cyclic or ring-containing hydrocarbon chain having from 1 to 30 carbon atoms, preferably from 1 to 20 carbon atoms; or two of $R^1$, $R^2$, $R^3$ and $R^4$, together with the E atom carrying them form a saturated, unsaturated or aromatic heterocycle, optionally comprising one or more heteroatoms, chosen from among oxygen, nitrogen, phosphorus and sulfur, the two remaining of $R^1$, $R^2$, $R^3$ and $R^4$, being as defined above;
  it being understood that when E represents sulfur, $R^4$ is absent; and
- X- represents an organic or inorganic counter-ion, chosen from among anions of strong or weak organic or inorganic acids, such as for example carboxylate (e.g. formate, acetate, propionate, butyrate, pentanoate), sulfate, sulfonate (e.g. *p*-toluenesolfonate, trifluoromethylsulfonate), sulfite, sulfonylimidide, phosphate, phosphonate or halide, e.g. iodide, bromide, chloride, or fluoride, or pseudo-halides, such as for example $(CN)^-$, $(BF_4)^-$ or $(PF_6)^-$.

In the above formula (O), when E is nitrogen, the onium salt is an ammonium salt. When E is phosphorus, the onium salt is a phosphonium salt, and when E is sulfur, the onium salt is a sulfonium salt.

Examples of saturated or unsaturated, linear, branched, cyclic or ring-containing hydrocarbon chain having from 1 to 30 carbon atoms, preferably from 1 to 20 carbon atoms include, are, but are not limited to, optionally substituted

linear or branched $C_1$-$C_{30}$ hydrocarbon chains, preferably $C_1$-$C_{20}$ hydrocarbon chains, optionally comprising one or more insaturations in the form of double bond(s) and/or triple bond(s) and/or saturated, undsaturated or aromatic ring (s), and optionally interrupted by one or more heteroatoms chosen from among oxygen, nitrogen, sulfur and phosphorus.

Substituants of the hydrocarbon chains may be halogen, hydroxyl, thiol, oxo, thioxo, $C_3$-$C_{10}$ saturated, unsaturated, or (hetero)aromatic ring (e.g. cyclopentyl, furyl, cyclohexyl, phenyl, naphthyl, etc.), and the like.

More precise non limiting examples of said hydrocarbon chains include methyl, ethyl, n-propyl, *iso*-propyl, n-butyl, *iso*-butyl, *tert*-butyl, n-pentyl, *iso*-pentyl, *neo*-pentyl, hexyl, lauryl, cetyl, cyclopentyl, furyl, cyclohexyl, phenyl, benzyl, phenethyl, pyridyl, naphthyl, quinolyl, and the like.

Examples of saturated, unsaturated or aromatic heterocycle, optionally comprising one or more heteroatoms, chosen from among oxygen, nitrogen, and sulfur, are, but are not limited to, optionally substituted imidazole, imidazoline, pyrrole, pyrolline, pyrrolidine, pyrazole, isothiazole, isoxazole, morpholine, pyridine, pyrazine, pyridazine, quinoline, iso-quinoline, indole, iso-indole, indazole, thiophene, thianthrene, and the like.

Substituants of the saturated, unsaturated or aromatic heterocycles may be halogen, hydroxyl, thiol, oxo, thioxo, $C_3$-$C_{10}$ saturated, unsaturated, or (hetero)aromatic ring (e.g. cyclopentyl, furyl, cyclohexyl, phenyl, pyridyl, naphthyl, quinolyl, etc.), and the like.

According to an embodiment, onium salts useful for the present invention are those of formula (O), wherein E represents sulfur, $R^1$, $R^2$ and $R^3$, which are identical or different, each represents akyl containing from 1 to 20 carbon atoms, preferably 1 to 10 carbon atoms, more preferably $R^1$, $R^2$ and $R^3$ are the same and represent akyl containing from 1 to 20 carbon atoms, preferably 1 to 10 carbon atoms, more preferably 1 to 6 carbon atoms, for example; and X- represents an organic or inorganic counter-ion, chosen from among carboxylate (e.g. formate, acetate, propionate, butyrate, pentanoate), sulfate, sulfonate (e.g. p-toluenesolfonate, trifluoromethylsulfonate), sulfite, sulfonylimidide, phosphate, phosphonate or halide, e.g. iodide, bromide, chloride, or fluoride, or pseudo-halides, such as for example $(CN)^-$, $(BF_4)^-$ or $(PF_6)^-$, preferably X is a sulfonylimidide, for example a bis(trifluoromethylsulfonyl)imide.

An example of onium salt of formula (O) is triethylsulfonium bis(trifluoromethylsulfonyl)imide (available at Fluka).

According to another embodiment, onium salts useful for the present invention are those of formula (O), wherein E represents phosphorus, $R^1$, $R^2$, $R^3$ and $R^4$, which are identical or different, each represents alkyl, aryl or aralkyl, and more preferably methyl, ethyl, propyl, butyl, pentyl or hexyl or phenyl or phenylalkyl, particularly benzyl, and $X^-$ is as defined above, preferably is chosen from among halides or anions of a strong or weak organic or inorganic acid, preferably weak acid, more preferably weak organic acid, for example acetate.

Examples of onium salt of formula (O), wherein E represents phosphorus, are tetrabutyl phosphonium bromide, benzyl triphenyl phosphonium bromide, benzyl triphenyl phosphonium chloride, butyl triphenyl phosphonium bromide, ethyl triphenyl phosphonium acetate, ethyl triphenyl phosphonium bromide, ethyl triphenyl phosphonium iodide, methyl triphenyl phosphonium bromide, tetra phenyl phosphonium bromide, n-propyl triphenyl phosphonium bromide.

According to still another embodiment, onium salts useful for the present invention are those of formula (O), wherein E represents nitrogen, $R^1$, $R^2$, $R^3$ and $R^4$, which are identical or different, each represents alkyl, aryl, aralkyl, and more preferably methyl, ethyl, propyl, butyl, pentyl, hexyl, cetyl or lauryl, or phenyl or phenylalkyl, particularly benzyl, and X- is as defined above, preferably is chosen from among halides or anions of strong or weak organic or inorganic acid, for example weak acid, particularly weak organic acid, for example acetate, or trifluoromethylsulfonate or para-toluenesulfonate.

Other preferred ammonium salts are those of formula (O), wherein E represents nitrogen, and wherein $R^1$ and $R^2$, together with the nitrogen atom carrying them form a 5- or 6-membered ring, saturated, unsaturated or aromatic, and optionally comprising one or more heteroatoms chosen from among oxygen, nitrogen or sulfur, and X, $R^3$ and $R^4$ are as defined above.

Examples of onium salt of formula (O), wherein E represents nitrogen, are tetrahexyl ammonium bromide, 1-ethyl-3-methylimidazolium bromide, 1-butyl-1-methylpyrrolidinium bromide, 1-butylpyridinium bromide, 1-butyl-1-methylpyrrolidinium bis (trifluoromethylsulfonyl) imide, 1-butyl-1-methylpyrrolidinium tetrafluoroborate, benzalkonium chloride, dodecyl pyridinium chloride, lauryl pyridinium chloride, lauryl pyridinium bromide, cetyl pyridinium chloride, cetyl pyridinium bromide, N-{[N-(2-stearoyloxyethyl)-carbamoyl]methyl}pyridinium chloride, N-{[N-(2-stearoyloxyethyl)carbamoyl]methyl}pyridinium para-toluene-sulfonate.

According to particularly preferred embodiment of the invention, onium salts used in the conductive fluid are represented by the following formula ($O_B$):

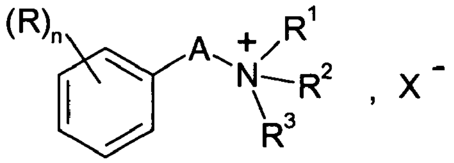

$(O_B)$

in which

- A is a divalent radical, generally an optionally substituted linear or branched, saturated or unsaturated hydrocarbon chain having from 1 to 20 carbon atoms, preferably from 1 to 10 carbon atoms, more preferably from 1 to 6 carbon atoms;
- R represents one or more identical or different substituents on the phenyl ring, such as halogen, hydroxyl, thiol, oxo, thioxo, $C_3$-$C_{10}$ saturated, unsaturated, or (hetero)aromatic ring (e.g. cyclopentyl, furyl, cyclohexyl, phenyl, naphthyl, etc.), and the like;
- n is 0, 1, 2, 3, 4 or 5
- $R^1$, $R^2$ and $R^3$, which are identical or different, each represents linear or branched alkyl having from 1 to 30 carbon atoms, or linear or branched alkenyl or alkynyl having from 2 to 30 carbon atoms ; and
- X- is an organic or inorganic counter ion, chosen from among anions of strong or weak organic or inorganic acids, such as for example carboxylate (e.g. formate, acetate, propionate, butyrate, pentanoate), sulfate, sulfite, phosphate, phosphonate or halide, e.g. iodide, bromide, chloride, or fluoride or pseudo-halide as defined above.

Compounds of formula $(O_B)$ form a sub-group of compounds of formula (O).

According to a further preferred embodiment, ammonium salts for use in the conductive fluid according to the present invention are of formula $(O_B)$, wherein:

- A represents $-CH_2-$;
- n is 0;
- $R^1$ and $R^2$, which are identical or different, each represents a linear or branched alkyl radical having from 1 to 6 carbon atoms, or a linear or branched alkenyl or alkynyl radical having from 2 to 6 carbon atoms ;
- $R^3$ represents a linear or branched alkyl radical having from 3 to 30 carbon atoms, a linear or branched alkenyl radical having from 3 to 30 carbon atoms, or a linear or branched alkynyl radical having from 3 to 30 carbon atoms ; and
- X represents a halogen atom selected from fluorine, chlorine, bromine and iodine.

Preferred compounds of formula $(O_B)$, wherein A represents $-CH_2-$ and n is 0, further present one or more of the following characteristics, preferably two or more of the following characteristics, and more preferably three or more of the following characteristics:

- $R^1$ and $R^2$ are identical;
- $R^1$ and/or $R^2$ are linear or branched alkyls having from 1 to 6 carbon atoms;
- $R^1$ and/or $R^2$ are chosen from among methyl, ethyl, n-propyl, iso-propyl, n-butyl, iso-butyl, tert-butyl, n-pentyl and iso-pentyl;
- $R^3$ represents linear or branched alkyl having from 3 to 30 carbon atoms, preferably from 6 to 20 carbon atoms, more preferably from 8 to 18 carbon atoms; and
- X is chlorine or bromine.

According to a further preferred embodiment, ammonium salts are of formula $(O_B)$ in which:

- A represents $-CH_2-$;
- n is 0
- $R^1$ and $R^2$ are the same and each represents linear or branched alkyl having from 1 to 3 carbon atoms, preferably $R^1$ and $R^2$ each represents methyl;
- $R^3$ represents linear or branched alkyl having from 8 to 18 carbon atoms, preferably from 8 to 16 carbon atoms, advantageously 10 to 16 carbon atoms, for example 12 to 16 carbon atoms; and
- X represents chlorine or bromine.

Mixtures of salts of formula (O) and/or $(O_B)$ as disclosed above may be used.

According to a particularly preferred embodiment of the present invention, the organic salt to be used in the conductive fluid according to the present invention is a benzalkonium halide or a mixture of benzalkonium halides as shown herein below:

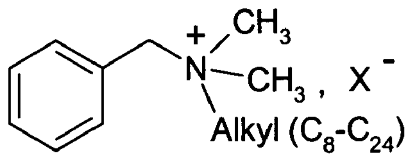

in which X represents a halogen atom, preferably chosen from among fluorine, chlorine, bromine or iodine, more preferably from among chlorine or bromine, and Alkyl ($C_8$-$C_{24}$) indicate an linear or branched alkyl chain having from 8 to 24 carbon atoms, preferably 8, 10, 12, 14, 16, 18, 20, 22 or 24 carbon atoms.

Particularly preferred benzalkonium halides may be chosen from among benzyl cetyl dimethyl ammonium chloride (CAS RN 122-18-9); stearyl dimethyl benzyl ammonium chloride (CAS RN 122-19-0); dodecyl dimethyl benzylammonium chloride (CAS RN 139-07-1); tétradecyl dimethyl benzylammonium chloride (CAS RN 139-08-2); decyl dimethyl benzylammonium chloride (CAS RN 965-32-2); as well as benzalkonium chloride, with an alkyl distribution of from $C_8H_{17}$ to $C_{16}H_{33}$ (CAS RN 8001-54-5), and mixtures thereof in all proportions.

Such benzalkonium halides with an alkyl distribution in $C_8$-$C_{24}$, preferably with an alkyl distribution in $C_8$-$C_{20}$, as well as all onium salts useful for the present invention as defined above are either commercially available or easily accessible through chemical synthesis according to known or adaptable operating processes.

Compounds of formula (O) may be used in quantities as low as about 0.005% to about 1% by weight to the conductive fluid, advantageously as low as about 0.01% to about 0.45% by weight.

The quantity of the onium salt may also depend on the nature/structure of the salt. Specifically, the onium salt, because of its structure and/or amount in the conductive fluid), should not cause the conductive fluid and the non-conductive fluid be miscible the one into the other, or lead to emulsion, suspension, dispersion or the like.

As indicated above, the presence in the conductive fluid of at least one onium salt of formula (O) provides the multi-phase liquid composition with a low contact angle, a low interfacial tension, and a wide focal range. Moreover, even with amounts as low as those indicated above, the at least one onium salt of formula (O) provides the required conductive properties to the liquid phase in which it is contained. The use of any additional compound normally compulsory to the conductive effect is therefore not necessary, although the use of such additional compound, such as an inorganic salt is not strictly excluded form the present invention.

Furthermore, certain compounds of formula (O), particularly those of formula ($O_B$), and more particularly benzalkonium salts, are well known in the art for their antibacterial properties. The use of any additional biocide, fungicide, or other bactericide is consequently not necessary, although such additional biocide, fungicide, or bactericide is not strictly excluded from the scope of the present invention.

More particularly, the electrical conductive fluid comprises water and at least one onium salt of formula (O) as defined above.

Water to be used in the conductive fluid should be as pure as possible, i.e. free, or substantially free, of any other dissolved components that could alter the optical properties of the electrowetting device, optical lens driven by electrowetting.

Ultra pure water is most preferably used.

According to another feature, the electrical conductive fluid, comprising water and at least one onium salt, may further comprise at least one organic or inorganic ion, typically at least one organic or inorganic ionic or ionizable salt, or a mixture thereof, soluble in said conductive fluid. However, such an additional organic or inorganic ion is not preferred.

In the following specification, "ionic salts" refers to salts that are totally or substantially totally dissociated (such as a bromine-anion and a cation) in water. "Ionizable salts" refers to salts that are totally or substantially totally dissociated in water, after chemical, physical or physico-chemical treatment.

Ions that are suitable in the present invention include both cations and anions, which may be simultaneously, but not necessarily, present together in the conductive fluid.

Examples of anions include, but are not limited to, halides, e.g. chloride, bromide, iodide, sulfate, carbonate, hydrogen carbonate, acetate, and the like, as well as mixtures thereof. Examples of cations include, but are not limited to, alkali, alkaline-earth and metallic cations.

Organic and inorganic ionic and ionizable salts are thus well known in the art, and examples of these include, but are not limited to potassium acetate, magnesium chloride, zinc bromide, lithium bromide, lithium chloride, calcium chloride, sodium sulfate, and the like, as well as mixtures thereof.

Mixtures of one or more ionic salts together with one or more ionizable salts are also encompassed by the

present invention.

The concentration of the dissolved salt in the conductive fluid may vary in large proportions, keeping in mind a too high concentration may result in undesirable increase of density, refractive index, turbidity, haze, or loss of transparency for the optical lens.

According to another feature, the electrical conductive fluid may additionally comprise at least one conventional freezing-point lowering agent. As freezing-point lowering agent, mention may be made of alcohol, glycol, glycol ether, polyol, polyetherpolyol and the like, or mixtures thereof. Examples thereof include the following agents: ethanol, ethylene glycol, monopropylene glycol (MPG or 1,2-propane diol), 1,3-propane diol, 1,2,3-propane triol (glycerol), and the like, and mixtures thereof.

According to still another feature, the conductive fluid may also further comprise at least one viscosity-controlling agent, especially a viscosity-controlling agent. The viscosity controlling agent that may be used in the invention may be of any type known from the one skilled in the art and may be advantageously an alcohol, a glycol, a glycol ether, a polyol, a poly ether polyol and the like, or mixtures thereof. Examples thereof include the following agents: ethanol, ethylene glycol, monopropylene glycol (MPG), 1,2,3-propane triol (glycerol), and the like, and mixtures thereof.

In a preferred embodiment, the viscosity-controlling agent has a molecular weight of less than about 130 g/mol.

The viscosity-controlling agent may be the same or different from the freezing-point lowering agent. According to a feature, the conductive fluid comprises an agent that is both a freezing-point lowering agent and a viscosity-controlling agent.

As mentioned above, the onium salt present in the conductive fluid may have intrinsic bactericidal, fungicidal and biocide properties. One or more other bactericidal, fungicidal or biocide agent(s) may however be present in the conductive fluid when necessary in order to prevent the development of organic elements, such as bacteria, fungi, algae, micro-algae, and the like, which could worsen the optical properties of the electrowetting device, particularly in the case of a lens driven by electrowetting. Such additional agent(s) may be of any type known in the art, provided, as is the case for the freezing-point lowering agent and the viscosity-controlling agent, that it does not alter the required optical properties of the conductive fluid (transparency, refractive index, and the like, as mentioned above). Biocide compounds include those usually known and used in the art, and for example 2-methyl-4-isothiazoline-3-one (MIT) and 1,2-benzisothiozoline-3-one (BIT).

As already stated above, the conductive fluid is present together with an immiscible non conductive fluid so as to form a multi-phase liquid composition for use in an electrowetting device, e.g. an optical lens driven by electrowetting.

Another aspect of the invention is therefore a multi-phase liquid composition comprising an onium salt-containing conductive fluid and a non-conductive fluid, the non-conductive fluid being immiscible in the conductive fluid.

According to another aspect, the non-conductive fluid comprises an organic or an inorganic (mineral) compound or mixture thereof. Examples of such organic or inorganic compounds include a Si-based monomer or oligomer, a Ge-based monomer or oligomer, a Si-Ge-based monomer or oligomer, a hydrocarbon, or a mixture thereof.

The hydrocarbon may be linear or branched and may contain one or more saturated, unsaturated or partially unsaturated cyclic moiety(ies). The hydrocarbon has advantageously from about 10 to about 35 carbon atoms, preferably from about 15 to about 35 carbon atoms. Hydrocarbons having less than about 10 carbon atoms are less preferred since miscibility into the conductive fluid may occur.

The hydrocarbon may comprise one or more insaturation(s) in the form of double and/or triple bond(s). More than 2 or 3 double or triple bonds are not preferred considering the risk of decomposition with UV radiations. Preferably the hydrocarbon does not contain any double or triple bonds, in which case the hydrocarbons are referred to as alkanes in the present specification.

The hydrocarbon may further comprise one or more heteroatoms, as substituants and/or as atoms or group of atoms interrupting the hydrocarbon chain and/or ring. Such heteroatoms include, but are not limited to, oxygen, sulfur, nitrogen, phosphor, halogens (mainly as fluorine, chlorine, bromine and/or iodine). Care should be taken that the presence of one or more heteroatom(s) does not impact the immiscibility of the two fluids.

May be used mixtures containing more than about 99.8 % of alkanes. These mixtures may contain little amount of aromatic groups and/or unsaturated moieties in a ratio lower than about 1 weight % (preferentially lower than about 0.5%). Chlorine may also be present in said alkanes, in a ratio lower than about 10 weight %, preferentially lower than about 7%. Such impurities may be present as sub-product resulting from the preparation of the alkanes, e.g. when they are obtained by distillation process.

According to various features of the present invention, the hydrocarbon is or comprises:

- a linear or branched alkane, such as decane ($C_{10}H_{22}$), dodecane ($C_{12}H_{24}$), squalane ($C_{30}H_{62}$), and the like;
- an alkane comprising one or more rings, such as tert-butylcyclohexane ($C_{10}H_{20}$), and the like;
- a fused ring system, such as $\alpha$-chloronaphthalene, $\alpha$-bromonaphthalene, *cis,trans*-decahydronaphthalene ($C_{10}H_{18}$), and the like;
- a mixture of hydrocarbons, such as those available as Isopar® V, Isopar® P (from ExxonMobil); and the like;

In the present application, an oligomer is a compound having a number of identical (homo-oligomers) or different (co-oligomers) repeating units, of between about 2 and about 20, preferably between about 2 and about 10, and still more preferably between about 2 and about 5. Oligomers having more than 20 repeating units are less preferred since they may induce an undesirable increase of viscosity at low temperature.

The non-conductive fluid may contain one or several of the following Si-based species:

- a siloxane of the formula 1 a, 1 b or 1 c:

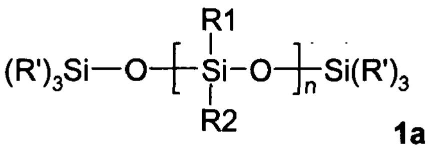

**1a**

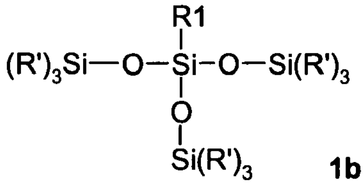

**1b**

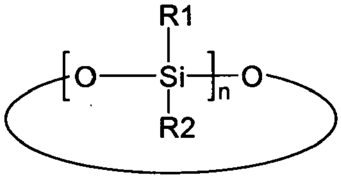

**1c**

wherein each of R1, R2 and R' independently represents alkyl, (hetero)aryl, (hetero)arylalkyl, (hetero)arylalkenyl or (hetero)arylalkynyl and n is comprised between about 1 and about 20, preferably between about 1 and about 10, more preferably n is 1, 2, 3, 4 or 5 with the precision that n is greater than 2 in formula 1 c;

- a silane of formula 2:

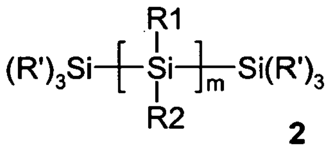

**2**

wherein R1, R2 and R' are as defined above and m is comprised between 1 and 20, preferably between about 1 and about 10, more preferably m is 1, 2 or 3;

- a monosilane of formula 3:

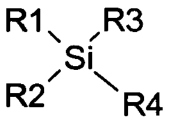

**3**

wherein R1 and R2 are as defined above, and each of R3 and R4 independently represents alkyl, (hetero)aryl, (hetero) arylalkyl, (hetero)arylalkenyl or (hetero)arylalkynyl.

In the above formulae:

- alkyl means a straight or branched alkyl radical having from about 1 to about 10 carbon atoms, preferably from about 1 to about 6 carbon atoms; preferred alkyl includes methyl, ethyl, *n*-propyl, iso-propyl; alkyl radical may be halogenated, for instance may comprise a 1,1,1-trifluopropyl group;
- (hetero)aryl means an aromatic or heteroaromatic radical containing from about 5 to about 12 atoms, forming at least one, preferably one, aromatic and/or heteroaromatic ring, said ring(s) being optionally substituted by one or

more halogens, preferably 1, 2 or 3 halogen atoms (mainly fluorine, chlorine and/or bromine), and being optionally fused with one or more saturated, partially saturated or unsaturated ring system; preferred (hetero)aryl is phenyl or naphthyl, optionally substituted with 1, 2 or 3 halogen atoms;

- (hetero)arylalkyl is as defined above for each of the alkyl and (hetero)aryl radical; preferred (hetero)arylalkyls include benzyl, phenethyl, optionally substituted with 1, 2 or 3 halogen atoms;
- (hetero)arylalkenyl and (hetero)arylalkynyl correspond to radicals wherein the (hetero)aryl moiety is as defined above, and alkenyl and alkynyl represent a straight or branched alkyl radical, as defined above, further comprising one or more, preferably one, double bond or one or more, preferably one, triple bond, respectively.

According to a preferred embodiment, in the above formulae 1 a, 1 b and 2, all R' are identical or different and are preferably methyl or halogenated alkyls.

According to a further preferred embodiment, in the above formulae 1a, 1b and 2, all R' are the same, more preferably each R' is methyl.

The non-conductive fluid may contain one or several of the following specific Si-based species:

- hexamethyldisilane, diphenyldimethylsilane, chlorophenyltrimethylsilane, phenyltrimethylsilane,
- phenethyltris(trimethylsiloxy)silane, phenyltris(trimethylsiloxy)silane, polydimethylsiloxane, tetraphenyltetramethyltrisiloxane, poly(3,3,3-trifluoropropylmethylsiloxane), 3,5,7-triphenylnonamethylpentasiloxane, 3,5-diphenyloctamethyltetrasiloxane, 1,1,5,5-tetraphenyl-1,3,3,5-tetramethyltrisiloxane, and hexamethylcyclotrisiloxane.

The non-conductive fluid may contain one or several of the following germane based species:

- germanoxane of formula 4
- germane of formula 5
- germane of formula 6

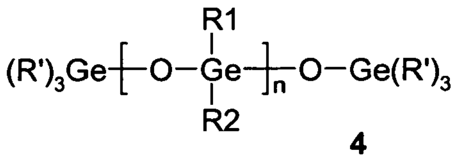
4
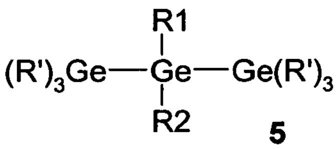
5
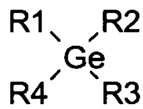
6

wherein R', R1, R2, R3, R4 and n are as defined above.

The non-conductive fluid may contain one or several of the following specific germane based species: hexamethyldigermane, diphenyldimethylgermane, phenyltrimethylgermane.

According to another feature, the non-conductive fluid comprises at least one Si- and/or Ge-based compound substituted by one or more phenyl groups and/or other groups like fluorinated or non fluorinated alkyl (ethyl, *n*-propyl, *n*-butyl), linear or branched alkyls, chlorinated or brominated phenyl groups, benzyl groups, halogenated benzyl groups; or a mixture of Si- and/or Ge-based compounds wherein at least one compound is substituted by one or more phenyl groups and/or other groups like fluorinated or non fluorinated alkyl (ethyl, *n*-propyl, *n*-butyl), linear or branched alkyls, chlorinated or brominated phenyl groups, benzyl groups, halogenated benzyl groups.

According to another feature of the present invention, the non-conductive fluid may comprise a wetting agent to increase the wettability of said fluid on the lower plate (insulating substrate) of the lens. The nature of the wetting agent will depend on the nature of the lower plate surface of said lens.

Said wetting agents are well known in the art and may be for example chosen from among monohalogenated aromatic compounds, $\alpha,\omega$-dihalogenated alkyl compounds or mixtures thereof.

Still according to another feature, the organic or an inorganic compound or mixture thereof that is the primary component of the non-conductive fluid may have itself wetting properties with respect to the substrate or the coating, or may comprise a component that has this property. The organic or an inorganic compound may thus be itself the wetting agent when a specific substrate or coating is used.

One or more of the following features may also be included:

- the non-conductive fluid further comprises an anti-oxidant;
- the non-conductive fluid further comprises a biocide compound, which may be the same as, or different from, the biocide optionally present in the conductive fluid;
- the non-conductive fluid or the conductive fluid or both further comprise a conventional UV-protecting agent.

Anti-oxidant compounds include those known by the one skilled in the art, and, for example, are of the BHT-type (butylated hydroxytoluene) anti-oxidants, such as 2,6-di-tert-butyl-4-methylphenol.

According to another feature, the non-conductive fluid and the conductive fluid have substantially the same density. This means it is acceptable that the difference of densities may vary within a short range. Typically, it is preferred the difference of densities is not more than about $3.10^{-3}$ g/cm$^3$ at 20°C.

According to another feature, the non-conductive fluid and the conductive fluid are transparent and each has a refractive index different from the other.

The difference of refractive index of the two fluids advantageously ranges from $\pm$ 0.03 to $\pm$ 0.8, preferably from $\pm$ 0.04 to $\pm$ 0.6, more preferably from $\pm$ 0.06 to $\pm$ 0.3.

In a preferred embodiment, the refractive index of the non-conductive fluid is greater than the refractive index of the conductive fluid.

In the present specification, for either or both the conductive and non-conductive fluids, as well as for the electrowetting device, transparency is to be understood as a transmission of more than about 96% over a wavelength range of from about 400 nm to about 700 nm and/or a scattering energy of less than about 2% in an about 60° (degrees) cone around the direct incidence in the same wavelength range.

In another aspect, the invention is related to an electrowetting device comprising a multi-phase liquid composition according to the invention.

As mentioned above, the multi-phase liquid composition comprises a conductive fluid, said conductive fluid comprising at least one onium salt, preferably at least one onium salt of formula (O) as previously described.

The multi-phase liquid composition also comprises a non-conductive fluid as herein before described, which is immiscible with the conductive fluid.

In a feature, the non-conductive fluid has a surface tension close to the surface energy of the substrate material or coating material.

In a preferred feature, the difference between the surface tension of the non-conductive or said non-conductive fluid component and the surface energy of the substrate material or coating material is equal to or less than about $\pm$ 15 mN/m (milliNewton/meter), preferably equal to or less than about $\pm$ 12 mN/m.

Surface energy includes a dispersive component and a polar component also called surface polarity. In a preferred feature, the substrate material or coating material has a low surface polarity or low polar component. Preferably, the substrate polar component is as low as possible, typically comprised between 0 and about 4 mN/m. More preferably, it is comprised between 0 and about 2 mN/m. The polar component may be measured as disclosed in F. M. Fowkes, A.C.S. Advances in chemistry series, 43, 99-111 (1964), and Arthur W. Adamson, Physical Chemistry of surfaces, Wiley 5th edition (1990).

In a feature, the insulating substrate has a surface energy above about 30 mN/m. In another feature, the insulating substrate has a surface energy below about 30 mN/m.

In another feature, the insulating substrate is made of an insulating material. This material is wettable (hydrophobic) by the non-conductive fluid in presence of the conductive fluid.

In another feature, the insulating substrate comprises an insulating material and an upper layer made of a material which is wettable (hydrophobic) by the non-conductive fluid in presence of the conductive fluid.

In an optical electrowetting device, such as for example optical liquid lenses controlled by electrowetting, the insulating and hydrophobic layer(s) is(are) in contact with a non conductive fluid (usually organic liquid phase which is non polar) and with a conducting fluid (usually a polar phase). Dielectric properties (dielectric constant, breakdown voltage, dissipation factor) of the insulating layer must be retained over time when in contact with said two different fluids (polar and non polar fluid), over the widest temperature range possible, ideally between -40°C and 85°C. Moreover, the insulating - hydrophobic layer(s) should present no or limited physical and chemical interaction with said both fluids present in the electrowetting device.

Moreover, on the window of the optical liquid lens system, the hydrophobic layer to be coated on the surface has to facilitate the wetting of non conductive fluid in the conductive fluid.

In a feature, the insulating substrate is used as a coating on the lower plate. This lower plate can be made of any appropriate material like metal, polymer or inorganic material that is not damaged during the deposition process and that has the other properties necessitated by its use, for instance transparency in the region of the lens requiring transparency. Each material may be associated with a usual coupling agent, used to improve the coating adhesion. This coupling agent is deposited on the lower plate prior to the coating process.

In a feature, a non-conductive fluid containing a compound of surface tension equal or above, preferably above, about 28 mN/m is used with an insulating substrate having a high surface energy, typically equal to or greater than about 30 mN/m, for example Parylene or another material (e.g. divinylsiloxane-benzocyclobutene polymer).

In another feature, a non-conductive fluid containing a compound of surface tension equal or below, preferably below, about 28 mN/m is used with an insulating substrate having a low surface energy, typically equal to or less than about 30 mN/m, for example Teflon® or another material (e.g. Cytop®).

In a preferred embodiment, insulating materials of high surface energy, typically greater than about 50 mN/m, are advantageously coated with a hydrophobic material, typically having a surface energy less than about 45 mN/m, with a low polarity, typically less than about 2 mN/m.

Examples of insulating and/or hydrophobic materials are shown below:

__Insulating materials__

o Silicon oxide ($SiO_2$);
o Silicon nitride ($Si_3N_4$);
o Barium titanium oxide ($BaTiO_3$);
o Hafnium oxide ($HfO_2$);
o Zircon oxide ($ZrO_2$);
o Tantalum oxide ($Ta_2O_5$);
o Titanium oxide ($TiO_2$);
o Barium strontium titanium oxide ($BaSrTiO_3$);
o Strontium titanium oxide ($SrTiO_3$);
o Aluminum oxide ($Al_2O_3$);
o Insulating sol-gels, such as those based on silicon alkoxides;
o "Spin on glass", such as Accuglass® from Honeywell;
o Polyimide polymers;
o Fluorinated polyimide polymers.

__Insulating and hydrophobic materials__

o Silicone polymers PDSM;
o Amorphous fluoro polymers, such as Teflon® AF 1600 and AF 1601 from DuPont;
o Poly(arylene ethers);
o Fluorinated poly(arylene ethers);
o para-Xylylene linear polymers, fluorinated or not, such as parylenes, for example Parylene C, Parylene F or Parylene AF-4, Parylene VT-4 polymer, Parylene N polymer;
o Amorphous fluoro polymers, such as Cytop® from Asahi Glass Co;
o Hyflon® polymer from Solvay;
o Aromatic vinyl siloxane polymers, such as Divinylsiloxane-benzocyclobutene (DVS-BCB) polymer from Dow Corning;
o Diamond like carbon (DLC);
o Poly(tetrafluoroethylene);
o Polyethylene;
o Polypropylene;
o Fluoro ethylene propylene polymer.

It should be understood that the insulating substrate may comprise one, two or more of the above-listed materials.

As illustrative examples, the insulating substrate is made of, or comprises an upper layer which is made of, a material, or materials, that may be chosen among the following materials:

- para-xylylene linear polymers, such as those produced by vaporization of the dimer di-para-xylylene at 150°C, pyrolysis of the dimer gas into a monomer of para-xylylene at 650-680°C, condensation and polymerization into a transparent polymer film. Examples include:

  * Parylene C;
  * Parylene N that is similar to Parylene C except that a chlorine atom is substituted by a hydrogen atom;
  * Parylene F (or Parylene AF-4 commercialized by Specialty Coatings Systems as Parylene HT®) that is similar to Parylene N except that methyl group are replaced by fluorinated methyl groups; and
  * Parylene VT-4, a poly(tetrafluoro-para-xylylene) having a similar structure to Parylene F, except that the four atoms in a repeating unit are attached to the benzene ring, and not to the aliphatic C atoms;

- fluorinated polymers like copolymers of tetrafluoroethylene and 2,2-bis(trifluoromethyl)-4,5-difluorodioxole such as those commercialized by Dupont under the name Teflon® AF1601 and Teflon® AF1600; these polymers are solubilized in a fluorinated solvent such as FC40 or FC75 commercialized by 3M. The polymer solution may be deposited

by spin-coating or dip-coating and the polymer film is formed after solvent evaporation;

- aromatic vinyl siloxane type polymers, such as divinylsiloxane-benzocyclobutene polymer (also named DVS-BCB or BenzoCycloButene or Cyclotene®, from Dow Chemical). This polymer may be spin-coated or dip-coated on a substrate and the polymer may be formed by a baking process; the polymerization is thermally activated, and corresponds to the selective reaction between the vinyl group (C=C) and the cyclobutene group from two monomers;
- cyclic perfluorinated type polymers, such as Cytop® from Asahi Glass Co., which is a perfluorinated polymer bearing perfluorofurane groups, obtained by cyclopolymerisation of perfluoro(alkenylvinylether). Cytop® is an amorphous fluorinated polymer, thus similar to Teflon® AF and solubilized in a fluorinated solvent. The polymer solution may be deposited by spin-coating or dip-coating and the polymer film is formed after solvent evaporation.

According to a feature, preferred insulating materials are chosen from among Teflon®, parylenes, aromatic vinyl siloxane type polymers and cyclic perfluorinated type polymers. Particularly preferred insulating materials are Parylene N, Parylene C, Parylene F or Parylene AF-4, Parylene VT-4, DVS-BCB polymer, Cytop®. Most preferred insulating materials are chosen from among Parylene F or Parylene AF-4, Parylene VT-4, DVS-BCB polymer and Cytop®, particularly preferred are Parylene F or Parylene AF-4 and DVS-BCB polymer.

In a feature, these polymers are used as coating on a substrate. This substrate can be made of any appropriate material like metal, polymer or inorganic material that is not degraded during the deposition process and that has the other properties necessitated by its use, for instance transparency in the region of the lens requiring transparency. Each material may be associated with a usual coupling agent, used to improve the substrate-coating adhesion. This coupling agent is deposited on the substrate prior to the coating process.

As it will appear from the present specification, the insulating substrate in the optical electrowetting device may not be planar and may rather present a recess. However, the natural contact angle according to the invention is the contact angle measured on a planar substrate made of the same material as the insulating substrate of the final device. The natural contact angle may be measured at room temperature, say between about 20 and about 25°C. It may also be measured at various temperatures within the recited use temperature range.

Application of a voltage to the conductive fluid favors the wettability of the substrate by the conductive fluid. This leads to a deformation of the triple interface, and a variation of the contact angle of the non-conductive fluid with respect to the insulating substrate, the contact angle being defined, as previously, by the angle formed between the tangent to the insulating substrate and the tangent to the surface of the non-conductive fluid, both measured at the point of the triple interface between the insulating substrate and the two fluids. The variation of the contact angle induces a modification of the shape of the meniscus defined by the fluid-fluid interface, and therefore a modification of the focal length of the device.

With a natural contact angle within the recited range, the contact angle hysteresis and the focal hysteresis are kept low, near zero or equal to zero. Contact angle hysteresis may be regarded as the difference of contact angle of the non-conductive fluid on the insulating substrate at a given voltage value between the increasing voltage ramp and the decreasing voltage ramp. According to a feature, the contact angle hysteresis is kept below a given value expressed as follows:

$$\Delta\mathrm{Cos}\ \theta_n = |\cos\theta_1 - \cos\theta_2| \leq \text{about } 0.06,$$

$$\text{preferably} \leq \text{about } 0.04, \text{ more preferably} \leq \text{about } 0.02,$$

wherein $\theta_1$ and $\theta_2$ are the angles formed between the tangent to the substrate and the tangent to the surface of the non-conductive fluid, measured at the point of the triple interface, for a same value of voltage, $\theta_1$ being the value for the increasing voltage ramp direction and $\theta_2$ for the decreasing voltage ramp direction.

In another aspect, the invention is related to an electrowetting lens containing an electrowetting device according to the invention. In a feature, the lens comprises means to apply an A.C. voltage to the conductive fluid.

This lens may be used or be part of a variable focus liquid lens, an optical diaphragm, an optical zoom, an ophthalmic device, an electrowetting aperture and any other optical device using electrowetting.

In still another aspect, the invention is related to a set or to an apparatus comprising an electrowetting lens containing an electrowetting device according to the invention, and a driver or similar electronic means for controlling the lens. In an embodiment, a lens and the driver or similar electronic means are integrated in the apparatus. In another embodiment, the apparatus comprises several (more than one) lens(es) and at least one driver or similar electronic means. According to a feature, the apparatus comprises means to apply an A.C. voltage to the conductive fluid. The apparatus may be a camera, a cell phone, an endoscope, a telemeter, a dental video.

The invention is now described with the following examples which are presented as illustration of some specific embodiments and which are not intended to limit the scope of the invention, the scope of which is clearly defined in the

appended claims.

## ILLUSTRATIVE EXAMPLES

Figure 1 is a simplified cross-section view of a variable-focus liquid lens according to the invention.

Figure 2 represents a graph illustrating undesirable focal hysteresis in a liquid lens.

Figure 3 is a curve showing contact angle θ when a 0-70 V voltage range is applied (increasing & decreasing). The natural contact angle $\theta_0$ is obtained under 0 V voltage.

Figures 4 and 5 illustrate the influence, on the dynamic focal range, of the presence of onium salt in the conductive fluid of an optical lens driven by electrowetting, before and after thermal stress.

Figures 6 and 7 illustrate the influence, on hysteresis, of the presence of onium salt in the conductive fluid of an optical lens driven by electrowetting, before and after electrical stress.

Experimental studies

The following first and second experimental assays are conducted on a plane substrate. The following onium salts are assayed in these experimental studies:

1: Tetrahexyl ammonium bromide (99% from Fluka; CAS no. 4328-13-6)

2: Tetrabutyl phosphonium bromide (98% from Fluka; CAS no. 3115-68-2)

3: 1-Ethyl-3-methylimidazolium bromide (97% from Aldrich; CAS no. 65039-08-9)

4: 1-Butyl-1-methylpyrrolidinium bromide (99% from Aldrich; CAS no. 93457-69-3)

5: 1-Butylpyridinium bromide (99% from Fluka; CAS no. 874-80-6)

6: 1-Butyl-1-methylpyrrolidinium bis(trifluoromethylsulfonyl)imide (98% from Fluka)

7: 1-Butyl-1-methylpyrrolidinium tetrafluoroborate (97% from Fluka; CAS no. 345984-11-4)

8: Benzalkonium chloride (CAS no. 8001-54-5)

9: Dodecyl-pyridinium chloride (98% from Sigma-Aldrich; CAS no. 207234-02-4)

Natural contact angle, interfacial tension and maximum contact angle under a 0-70V voltage range are measured on a 5.5 +/- 0.5 μm Parylene C substrate. The same non conductive liquid NCF is used all along the experimental trials. Other non conductive liquid compositions were tested and provided equivalent results. The densities and refractive index of the different conductive fluids are sensibly the same so the results are entirely comparable. It is therefore estimated that the difference between the maximum contact angle ($\theta_{max}$) and the natural contact angle ($\theta_0$) represents a focal range, as shown on Figure 3.

In a first experimental assay, the conductive fluid is based on a mixture of water and glycol and 0.1 weight % to the total of the conductive fluid of an onium salt to be tested, added to 0.2% of sodium sulfate. As shown in the table below, the presence of an onium salt in the conductive fluid decreases the natural contact angle as well as the interfacial tension and increases the focal range.

| ***Onium salt in the conductive fluid*** | None | **1** | **2** | **8** |
|---|---|---|---|---|
| ***Natural contact angle (°)*** | 18.3 | 13.4 | 12.2 | 5.6 |
| $\Delta\theta$ | 52 | 71 | 75 | 85 |

(continued)

| ***Onium salt in the conductive fluid*** | None | **1** | **2** | **8** |
|---|---|---|---|---|
| ***Interfacial tension (mN/m)*** | 17.4 | 12.8 | 12.2 | 11.1 |

In a second assay, 0.45% of different onium salts are added to a water-glycol based conductive fluid. No inorganic salt is present, the conductive properties are thus only due to the onium salts. The same parameters are measured, before and after a thermal test (96 hours at 85°C) applied to the conductive fluid alone. Once again, the use of onium salts leads to low contact angle values, low interfacial tension values, to a wide focal range and to a good stability after thermal test.

| ***Organic salt in the conductive fluid*** | None | **2** | **3** | **4** | **5** | **8** |
|---|---|---|---|---|---|---|
| ***Natural contact angle*** | 23 | 17 | 16.1 | 19.9 | 16.7 | 9 |
| $\Delta\theta$ | na | 60 | 60 | 57 | 58 | 95 |
| ***Interfacial tension (mN)*** | 18.7 | 16.4 | 16.5 | 16.2 | 16.7 | 9.3 |
| ***Natural contact angle after thermal test*** | 18 | 17 | 16.6 | 17.9 | 12.4 | 9.9 |
| $\Delta\theta$ ***after thermal test*** | na | 57 | 57 | 57 | 63.3 | 92 |
| ***Interfacial tension (mN/m) after thermal test*** | 15.3 | 16.5 | 16.7 | 16.5 | 15.6 | 9.6 |
| na: not applicable | | | | | | |

**Thermal stability of organic salts solutions:**

Conditions for the thermal test are as follows: 120 h; at 85°C in a close bottle, then, measurement of contact angle on parylene, hysteresis, and interfacial tension (IFT) by electrowetting.

Electrowetting experiments were carried out in the presence of the non-conductive fluid NCF on Parylene C as the substrate.

Composition of the conductive fluid:

MPG, 60 weight%;
water, 39.65 weight%;
onium salt, 0.45 weight%.

Composition of non-conductive fluid NCF:

SIP 6827.0® (ABCR GmbH, Phenyltris(trimethylsiloxy)silane), 20 weight%;
DC 702® (mixture of cyclosiloxanes and phenylated siloxanes, Dow Corning), 59.4 weight%;
1,8-dichlorooctane, 20 weight%;
BHT (butylated hydroxytoluene anti-oxidant), 0.6 weight%.

The results are presented in the following Table:

| | ***Organic salts*** | | | | |
|---|---|---|---|---|---|
| | **2** | **3** | **4** | **5** | **8** |
| ***Initial values*** | | | | | |
| ***IFT (mN/m)*** | 16,39 | 16,50 | 16,24 | 14,41 | 9,29 |
| $\Delta\theta$ | 59,75 | 59,78 | 57,18 | 75,67 | 95,68 |
| ***Conductivity ($\mu$S/cm²)*** | 144,00 | 319,00 | 245,00 | 254,00 | 123,00 |
| ***Surface tension (mN/m)*** | 42,70 | 42,74 | 42,79 | 42,47 | 41,76 |
| ***Viscosity (mm²/s)*** | 9,193 | 9,137 | 9,215 | 9,192 | 9,184 |
| ***Density*** | 1,0423 | 1,0434 | 1,0430 | 1,0423 | 1,0417 |

(continued)

| | Organic salts | | | | |
|---|---|---|---|---|---|
| | **2** | **3** | **4** | **5** | **8** |
| ***Values after thermal test*** | | | | | |
| ***IFT (mN/m)*** | 16,49 | 16,69 | 16,46 | 15,63 | 9,58 |
| $\Delta\theta$ | 57,14 | 57,47 | 56,84 | 63,28 | 92,02 |
| ***Conductivity ($\mu S/cm^2$)*** | 151,20 | 341,00 | 256,00 | 271,00 | 153,30 |
| ***Surface tension (mN/m)*** | 42,57 | 42,77 | 42,66 | 42,63 | 41,41 |
| ***Viscosity ($mm^2/s$)*** | 9,196 | 9,134 | 9,176 | 9,194 | 9,105 |
| ***Density*** | 1,0424 | 1,0437 | 1,0432 | 1,0433 | 1,0417 |

These results evidence that the use of onium salts leads to a good stability of multi-phases liquid compositions, after thermal test regarding hydrolysis. Surface tension, interfacial tension and dynamic angle range measured by electrowetting experiments gave almost no variation after the thermal stress. The hysteresis was also stable, indicating that no degradation of the interface parylene / liquids occurred.

Furthermore, an optical liquid lens was prepared with still the same non-conductive fluid and a conductive fluid containing or not 0.1 % of benzalkonium chloride.
The optical parameters show that the focal range of the benzalkonium formulation is improved by 50%.

After electrical (70 V) and thermal test (as defined above), the drift of the wave front error and the hysteresis was particularly well controlled in the presence of benzalkonium chloride. The focal range drift depends only to the offset variation, indicating that the interfacial tension in lens was very stable.

Thermal and electrical tests are conducted on liquids which are enclosed in an optical lens. The electrical test consists in applying a 70 V alternative current (frequency 1 kHz) to the lens, at ambient temperature (25-30°C), during 21 consecutive days. The lens is assayed for hysteresis deviation due to electrical stress with a HASO wavefront sensor.

Figure 4 and Figure 5 respectively represent the dynamic focal range values as measured in an optical lens, before and after thermal test, in a comparative study:

- without any salt (reference); and
- in the presence of 0.1 % of benzalkonium chloride in the conductive fluid respectively.

Figure 6 and Figure 7 respectively represent the hysteresis values as measured in an optical lens, before and after electrical test, in a comparative study:

- without any salt (reference); and
- in the presence of 0.1 % of benzalkonium chloride in the conductive fluid respectively.

Not only the presence of the onium salt increases the focal range and lowers the hysteresis, but also these properties remain after thermal and electrical stress.

## Claims

1. Use of an onium salt, preferably a sulfonium salt or a phosphonium salt or an ammonium salt, in the conductive fluid of an optical electrowetting device.

2. The use of claim 1 wherein the onium salt is represented by formula (O):

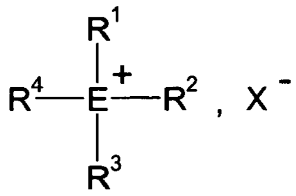

(O)

in which

- E represents nitrogen, phosphorus or sulfur, preferably nitrogen or phosphorus, more preferably nitrogen;
- $R^1$, $R^2$, $R^3$ and $R^4$, which are identical or different, each represents a saturated or unsaturated, linear, branched, cyclic or ring-containing hydrocarbon chain having from 1 to 30 carbon atoms, preferably from 1 to 20 carbon atoms; or

two of $R^1$, $R^2$, $R^3$ and $R^4$, together with the E atom carrying them form a saturated, unsaturated or aromatic heterocycle, optionally comprising one or more heteroatoms, chosen from among oxygen, nitrogen, phosphorus and sulfur, the two remaining of $R^1$, $R^2$, $R^3$ and $R^4$, being as defined above;

it being understood that when E represents sulfur, $R^4$ is absent; and

- X- represents an organic or inorganic counter-ion, chosen from among anions of strong or weak organic or inorganic acids, such as for example carboxylate (e.g. formate, acetate, propionate, butyrate, pentanoate), sulfate, sulfonate (e.g. p-toluenesolfonate, trifluoromethylsulfonate), sulfite, sulfonylimidide, phosphate, phosphonate or halide, e.g. iodide, bromide, chloride, or fluoride, or pseudo-halides, such as for example $(CN)^-$, $(BF_4)^-$ or $(PF_6)^-$.

**3.** The use of claim 2, wherein E represents sulfur, $R^1$, $R^2$ and $R^3$, which are identical or different, each represents akyl containing from 1 to 20 carbon atoms, preferably 1 to 10 carbon atoms, more preferably $R^1$, $R^2$ and $R^3$ are the same and represent akyl containing from 1 to 20 carbon atoms, preferably 1 to 10 carbon atoms, more preferably 1 to 6 carbon atoms, for example; and X- represents an organic or inorganic counter-ion, chosen from among carboxylate (e.g. formate, acetate, propionate, butyrate, pentanoate), sulfate, sulfonate (e.g. p-toluenesolfonate, trifluoromethylsulfonate), sulfite, sulfonylimidide, phosphate, phosphonate or halide, e.g. iodide, bromide, chloride, or fluoride, or pseudo-halides, such as for example $(CN)^-$, $(BF_4)^-$ or $(PF_6)^-$, preferably X is a sulfonylimidide, for example the onium salt is bis(trifluoromethylsulfonyl)imide.

**4.** The use of claim 2, wherein E represents phosphorus, $R^1$, $R^2$, $R^3$ and $R^4$, which are identical or different, each represents alkyl, aryl or aralkyl, and more preferably methyl, ethyl, propyl, butyl, pentyl or hexyl or phenyl or phenylalkyl, particularly benzyl, and X- is an halide or an anion of a strong or weak organic or inorganic acid, preferably a weak acid, more preferably a weak organic acid, for example acetate.

**5.** The use of claim 4, wherein the onium salt is chosen from among tetrabutyl phosphonium bromide, benzyl triphenyl phosphonium bromide, benzyl triphenyl phosphonium chloride, butyl triphenyl phosphonium bromide, ethyl triphenyl phosphonium acetate, ethyl triphenyl phosphonium bromide, ethyl triphenyl phosphonium iodide, methyl triphenyl phosphonium bromide, tetra phenyl phosphonium bromide, and n-propyl triphenyl phosponium bromide.

**6.** The use of claim 2, wherein E represents nitrogen, $R^1$, $R^2$, $R^3$ and $R^4$, which are identical or different, each represents alkyl, aryl, aralkyl, and more preferably methyl, ethyl, propyl, butyl, pentyl, hexyl, cetyl or lauryl, or phenyl or phenylalkyl, particularly benzyl, or two of $R^1$, $R^2$, $R^3$ and $R^4$, together with the nitrogen atom carrying them form a 5- or 6-membered ring, saturated, unsaturated or aromatic, and optionally comprising one or more heteroatoms chosen from among oxygen, nitrogen or sulfur, and X- is an halide or an anion of a strong or weak organic or inorganic acid, for example a weak acid, particularly a weak organic acid, for example acetate, or trifluoromethylsulfonate or para-toluenesulfonate.

**7.** The use of claim 6, wherein the onium salt is chosen from among tetrahexyl ammonium bromide, 1-ethyl-3-methylimidazolium bromide, 1-butyl-1-methylpyrrolidinium bromide, 1-butylpyridinium bromide, 1-butyl-1-methylpyrrolidinium bis (trifluoromethylsulfonyl) imide, 1-butyl-1-methylpyrrolidinium tetrafluoroborate, benzalkonium chloride, dodecyl pyridinium chloride, lauryl pyridinium chloride, lauryl pyridinium bromide, cetyl pyridinium chloride, cetyl pyridinium bromide, N-{[N-(2-stearoyloxyethyl)carbamoyl]methyl}pyridinium chloride, and N-{[N-(2-stearoyloxyethyl) carbamoyl]methyl}pyridinium para-toluene-sulfonate.

**8.** The use of claim 1, wherein the onium salt is represented by formula ($O_B$):

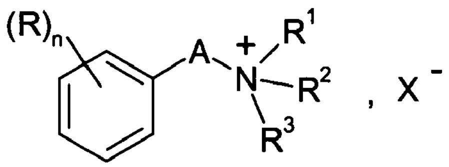

($O_B$)

in which

- A is a divalent radical, generally an optionally substituted linear or branched, saturated or unsaturated hydrocarbon chain having from 1 to 20 carbon atoms, preferably from 1 to 10 carbon atoms, more preferably from 1 to 6 carbon atoms, advantageously A represents $-CH_2-$;
- R represents one or more identical or different substituents on the phenyl ring, such as halogen, hydroxyl, thiol, oxo, thioxo, $C_3$-$C_{10}$ saturated, unsaturated, or (hetero)aromatic ring (e.g. cyclopentyl, furyl, cyclohexyl, phenyl, naphthyl, etc.), and the like;
- n is 0, 1, 2, 3, 4 or 5; advantageously n is 0;
- $R^1$, $R^2$ and $R^3$, which are identical or different, each represents linear or branched alkyl having from 1 to 30 carbon atoms, or linear or branched alkenyl or alkynyl having from 2 to 30 carbon atoms; preferably $R^1$ and $R^2$ are the same and each represents linear or branched alkyl having from 1 to 3 carbon atoms, more preferably $R^1$ and $R^2$ each represents methyl, and $R^3$ represents linear or branched alkyl having from 8 to 18 carbon atoms, preferably from 8 to 16 carbon atoms, advantageously 10 to 16 carbon atoms, for example 14 to 16 carbon atoms; and
- $X^-$ is an organic or inorganic counter ion, chosen from among anions of strong or weak organic or inorganic acids, such as for example carboxylate (e.g. formate, acetate, propionate, butyrate, pentanoate), sulfate, sulfite, phosphate, phosphonate or halide, e.g. iodide, bromide, chloride, or fluoride and preferably X represents chlorine or bromine.

**9.** The use of claim 8, wherein the onium salt is a benzalkonium halide, preferably benzalkonium chloride.

**10.** The use of claim 1, wherein the onium salt is present in the conductive fluid in a quantity of between about 0.005% to about 1% by weight to the conductive fluid, advantageously as low as about 0.01% to about 0.45% by weight.

**11.** The use of claim 1, wherein the onium salt is present with water in the conductive fluid.

**12.** The use of claim 1, wherein the conductive fluid further comprises at least one other organic or inorganic ion.

**13.** The use of claim 1, wherein the electrowetting device is an optical lens driven by electrowetting.

**14.** An optical electrowetting device comprising a conductive fluid and a non-conductive fluid that is not miscible in the conductive fluid, wherein the conductive fluid comprises an onium salt, preferably as defined in any of claims 2 to 9.

**15.** The optical electrowetting device of claim 14, wherein the onium salt is present in the conductive fluid in a quantity of between about 0:005% to about 1% by weight to the conductive fluid, advantageously as low as about 0.01 % to about 0.45% by weight.

**16.** The optical electrowetting device of claim 14, wherein the non-conductive fluid comprises an organic or an inorganic (mineral) compound chosen from among a Si-based monomer or oligomer, a Ge-based monomer or oligomer, a Si-Ge-based monomer or oligomer, a hydrocarbon, or a mixture thereof.

**17.** The optical electrowetting device of claim 14, which is an optical lens.

**18.** An apparatus comprising the optical electrowetting device of any of claims 14 to 17, and a driver or electronic means for controlling said device.

**19.** The apparatus of claim 18, which is a camera, a cell phone, an endoscope, a telemeter or a dental video.

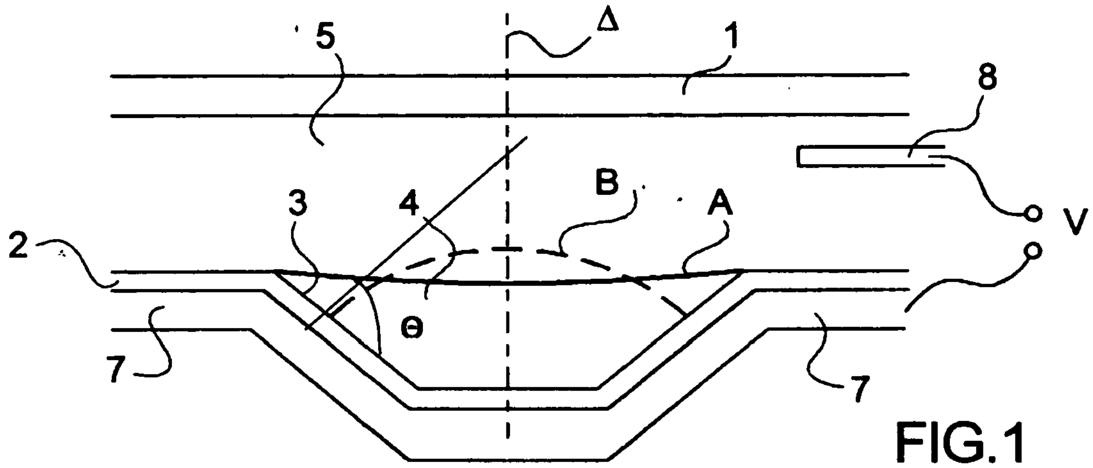
5
Δ
1
8
B
A
3
4
V
2
θ
7
7

FIG.1

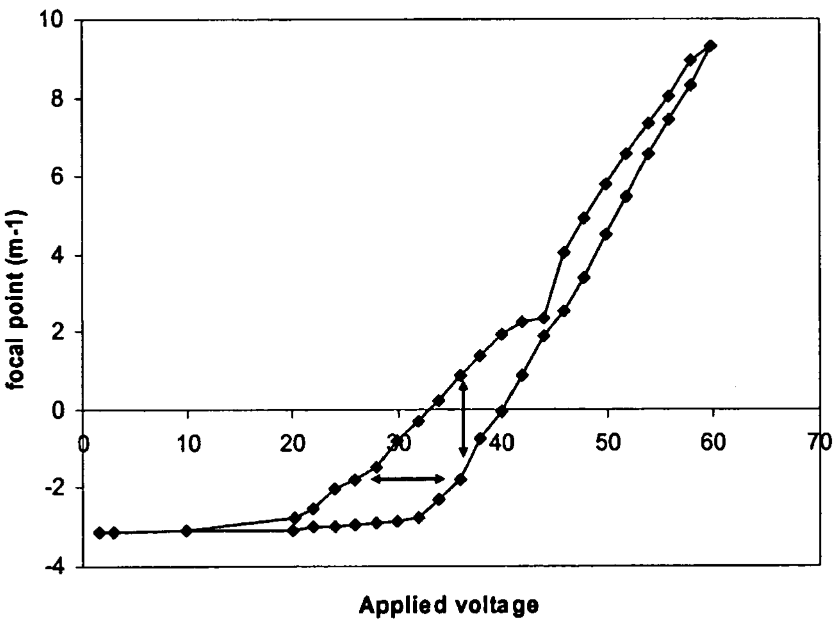
10
8
6
4
2
0
-2
-4
0
10
20
30
40
50
60
70
focal point (m-1)
Applied voltage

FIG. 2

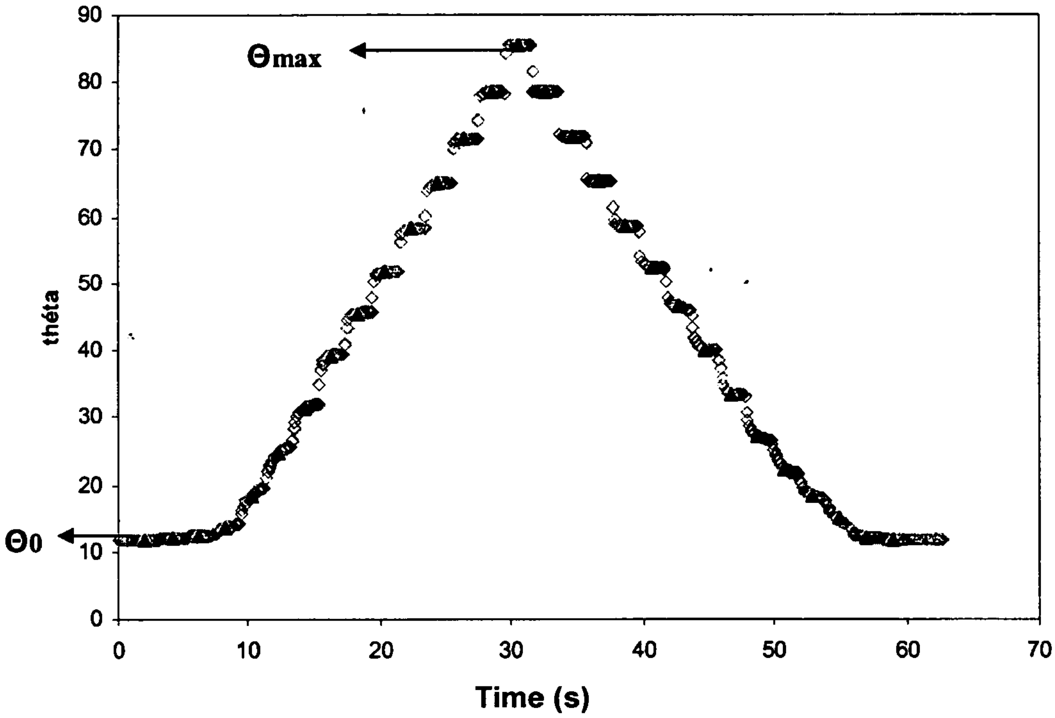
Θmax
Θ0
théta
Time (s)
0
10
20
30
40
50
60
70
80
90
0
10
20
30
40
50
60
70

FIG. 3

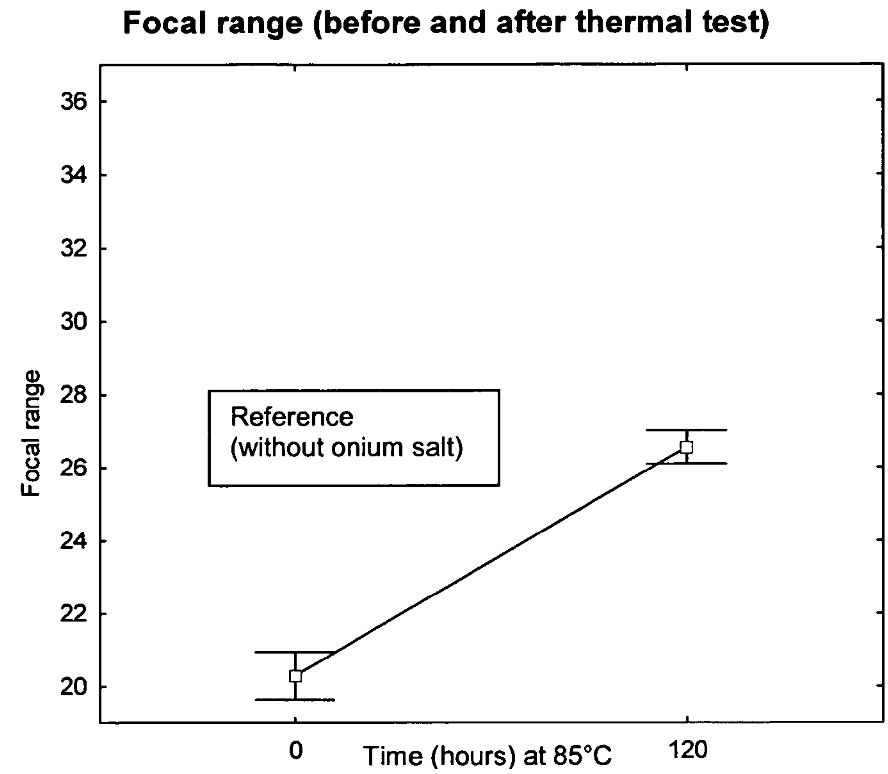
Focal range (before and after thermal test)
Focal range
36
34
32
30
28
26
24
22
20
Reference
(without onium salt)
0
Time (hours) at 85°C
120

FIG. 4

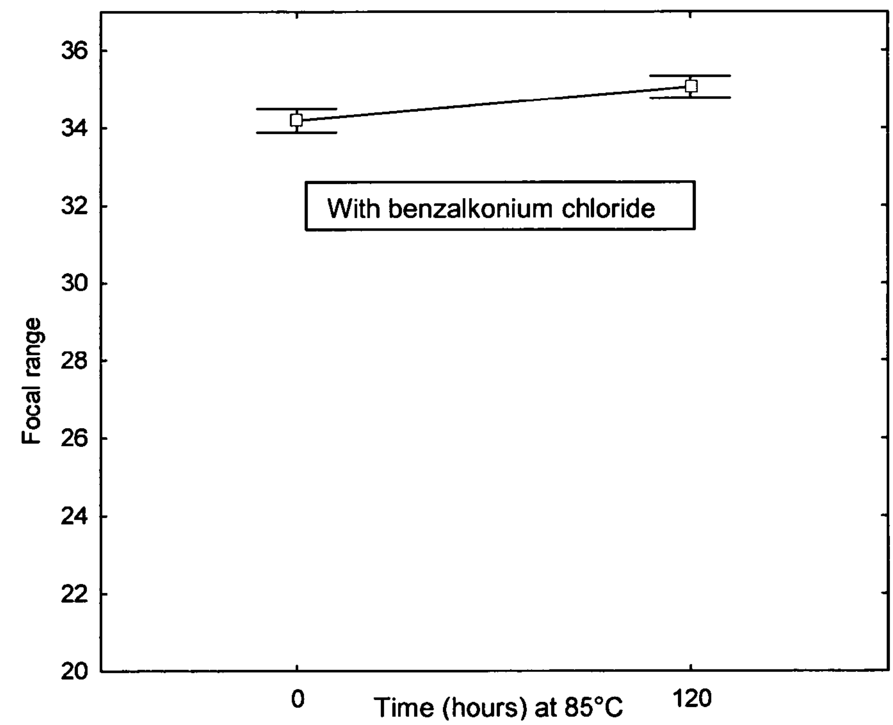
Focal range
36
34
32
30
28
26
24
22
20
With benzalkonium chloride
0
Time (hours) at 85°C
120

FIG. 5

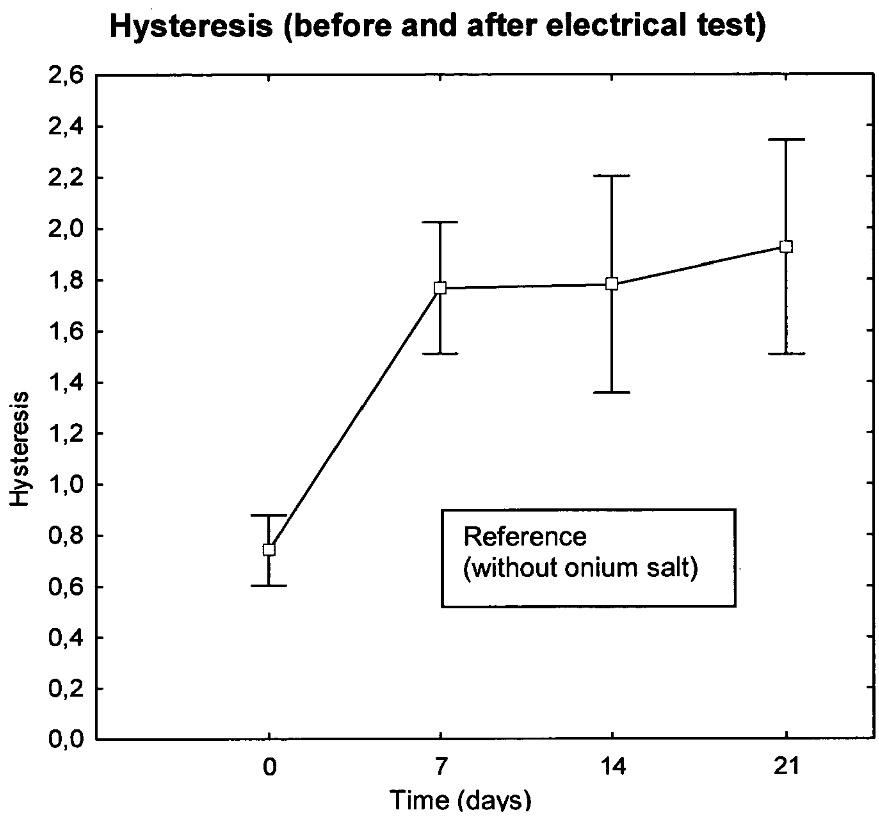
Hysteresis (before and after electrical test)
Hysteresis
2,6
2,4
2,2
2,0
1,8
1,6
1,4
1,2
1,0
0,8
0,6
0,4
0,2
0,0
0
7
14
21
Time (days)
Reference
(without onium salt)

FIG. 6

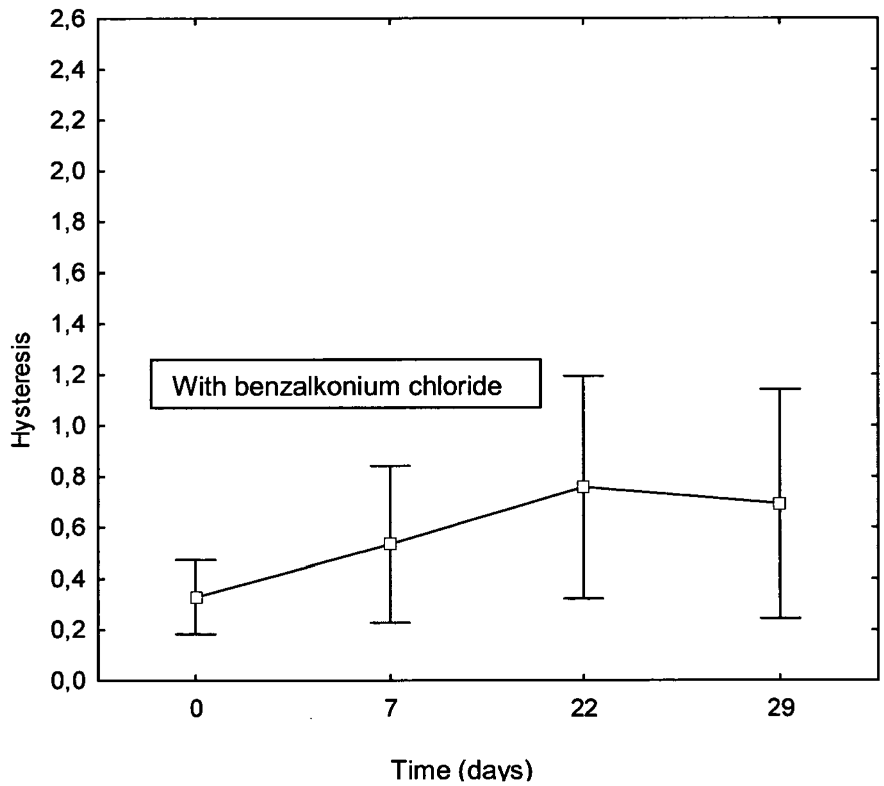
Hysteresis
2,6
2,4
2,2
2,0
1,8
1,6
1,4
1,2
1,0
0,8
0,6
0,4
0,2
0,0
0
7
22
29
Time (days)
With benzalkonium chloride

FIG. 7

European Patent Office

# EUROPEAN SEARCH REPORT

Application Number
EP 06 35 6100

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| X | US 2006/047039 A1 (KATO TAKASHI [JP] ET AL) 2 March 2006 (2006-03-02)<br>* abstract; claims 1-6; figures 1-4 *<br>* paragraph [0016] *<br>* paragraph [0106] - paragraph [0108] *<br>----- | 1-19 | INV.<br>G02B26/02 |
| X | YANG SHU ET AL: "Tunable and latchable liquid microlens with photopolymerizable components"<br>ADV MATER; ADVANCED MATERIALS JUN 5 2003, vol. 15, no. 11, 5 June 2003 (2003-06-05), pages 940-943, XP002413531<br>* abstract; figures 1,2 *<br>* page 941, column 1, paragraph 1 - column 2, last paragraph *<br>----- | 1-19 | |
| X | US 2003/227100 A1 (CHANDROSS EDWIN A [US] ET AL) 11 December 2003 (2003-12-11)<br>* abstract; claims 1-20 *<br>* paragraph [0042] *<br>* paragraph [0044] - paragraph [0045] *<br>----- | 1,14,<br>17-19 | TECHNICAL FIELDS SEARCHED (IPC) |
| A | US 5 302 757 A (SAEVA FRANKLIN D [US]) 12 April 1994 (1994-04-12)<br>* abstract; claims 1-18 *<br>----- | 1-19 | G02B |
| A | MUGELE FRIEDER ET AL: "Electrowetting: From basics to applications"<br>J PHYS CONDENS MATTER; JOURNAL OF PHYSICS CONDENSED MATTER JUL 20 2005, vol. 17, no. 28, 20 July 2005 (2005-07-20), pages R705-R774, XP020089268<br>* abstract *<br>* page 737, paragraph 7.2.1 *<br>----- | 1-19 | |

3

The present search report has been drawn up for all claims

| Place of search | Date of completion of the search | Examiner |
|---|---|---|
| The Hague | 8 January 2007 | Bockstahl, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 06 35 6100

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2007

| Patent document cited in search report | Publication date | Patent family member(s) | Publication date |
|---|---|---|---|
| US 2006047039 A1 | 02-03-2006 | JP 2006064946 A | 09-03-2006 |
| US 2003227100 A1 | 11-12-2003 | NONE | |
| US 5302757 A | 12-04-1994 | EP 0612419 A1 | 31-08-1994 |
| | | JP 7502348 T | 09-03-1995 |
| | | WO 9407183 A1 | 31-03-1994 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1166157 B1
- WO 2004099846 A
- WO 2004099845 A


### Non-patent literature cited in the description


- **F. M. FOWKES.** *A.C.S. Advances in chemistry series,* 1964, vol. 43, 99-111
- **ARTHUR W. ADAMSON.** Physical Chemistry of surfaces. Wiley, 1990